# FASCICULE DE BREVET EUROPEEN

(11) **EP 1 357 274 B1**
(45) Date de publication et mention de la délivrance du brevet: **18.10.2006**
(21) Numéro de dépôt: 03291003.6
(22) Date de dépôt: 24.04.2003
(51) Int. Cl.: F02B 23/06

(54) **Chambre de combustion de moteur multicylindrique à allumage par compression, notamment de type diesel à injection directe et moteur associé**
Brennkammer für eine mehrzylindrige, selbstzündende Brennkraftmaschine, insbesondere für einen direkteingespritzen Dieselmotor sowie zugehöriger Motor
Combustion chamber for a multi-cylinder compression ignition engine, particularly a direct injection Diesel engine, and associated engine

(30) Priorité: 24.04.2002 FR 0205127
(43) Date de publication de la demande: 29.10.2003
(73) Titulaire: Renault s.a.s., 92100 Boulogne Billancourt (FR)
(72) Inventeur: Truant, Mathieu, 75013 Paris (FR)
(74) Mandataire: Cémeli, Eric Philippe Laurent

(56) Documents cités:
- EP-A- 0 845 589
- DE-C- 478 930
- US-A- 5 029 563
- PATENT ABSTRACTS OF JAPAN vol. 015, no. 374 (M-1160), 20 septembre 1991 (1991-09-20) -& JP 03 149315 A (YANMAR DIESEL ENGINE CO LTD), 25 juin 1991 (1991-06-25)
- PATENT ABSTRACTS OF JAPAN vol. 1995, no. 11, 26 décembre 1995 (1995-12-26) -& JP 07 208172 A (KUBOTA CORP), 8 août 1995 (1995-08-08)
- PATENT ABSTRACTS OF JAPAN vol. 1997, no. 06, 30 juin 1997 (1997-06-30) -& JP 09 049431 A (ISUZU MOTORS LTD), 18 février 1997 (1997-02-18)

## Description

L'invention concerne une chambre de combustion de moteur multicylindre à allumage par compression, et en particulier de moteur fonctionnant selon le cycle Diesel, comme utilisé dans l'industrie automobile.

On connaît, par exemple par les documents US 5 150 677 ou US 5 868 112, un moteur multicylindre à injection directe de carburant comprenant pour chaque cylindre une culasse sensiblement plate formant couvercle au-dessus du cylindre, au moins une (de préférence deux) soupape d'admission de l'air frais montée dans la culasse, sensiblement parallèle à l'axe du cylindre, au moins (de préférence deux) une soupape d'échappement montée dans la culasse sensiblement parallèle à l'axe du cylindre, un injecteur de carburant sensiblement parallèle à l'axe du cylindre et débouchant dans la culasse approximativement au centre du cylindre, un piston présentant un fond de bol profilé entouré d'une zone de chasse annulaire.

De très nombreuses formes de profil du bol ont été proposées tant dans le but d'améliorer les performances du piston que dans celui de limiter les émissions de fumées liées à une mauvaise élimination des suies.

D'une manière générale, les chambres de combustion Diesel à injection directe sous haute pression utilisées actuellement, présentent les traits suivants :
- le bol du piston est axysymétrique et d'axe vertical : il comporte une partie centrale ou téton surélevée se raccordant à une paroi latérale ou extérieure qui peut être verticale ou comporter une concavité. La partie centrale peut être en forme de cône d'angle α, comme montré dans les brevets mentionnés ci-dessus. Exceptionnellement, la partie latérale peut être évasée, comme montré dans les brevets US 4 662319, 4161165 ou 4242948, mais la préférence va généralement à une forme concave donnant au profil la forme d'un "chapeau mexicain".
- l'injecteur envoie plusieurs jets (plus de quatre) de carburant sous haute pression (une pression supérieure à 600 bars) disposés sur un cône d'angle β, appelé angle de nappe, et d'axe coïncidant avec l'axe du bol.
- l'injection principale se fait près du point mort haut (PMH), c'est-à-dire près du plan de la culasse.
- les axes de carburant intersectent la paroi extérieure du bol lorsque le piston est au point mort haut, comme on le voit par exemple sur les figures du document US 4635597, et il en résulte un mouvement tourbillonnaire d'axe horizontal destiné à dévier le mélange d'abord vers le bas puis le centre du bol.

L'abrégé du document JP 03149315 fait connaitre une chambre de combustion telle que définie dans le préambule de la revendication 1.

On pensait généralement que cette technique antérieure était globalement satisfaisante. Cependant, des études plus approfondies du déroulement de la combustion ont permis à la Demanderesse de constater une utilisation incomplète du volume de la cavité par la combustion à haut régime : de l'oxygène reste non utilisé, ce qui dégrade la combustion et les émissions polluantes ou encore dégrade les performances pour un même niveau d'émissions de polluants. Par ailleurs, même à faible régime, il existe un risque de confinement de la combustion dans la cavité et de mauvaise utilisation de la zone du cylindre lorsque le piston descend.

L'invention a pour but d'améliorer le fonctionnement et les performances d'un moteur, par une utilisation optimale du volume de la cavité à tous les régimes et une extraction facilitée de la combustion hors de la cavité pendant la détente.

L'invention atteint son but grâce à une chambre de combustion de moteur multicylindre à injection directe de carburant, selon la revendication 1.

En effet, la Demanderesse a montré qu'en choisissant une géométrie ainsi caractérisée pour le bol et le départ de la nappe d'injection, on assure une utilisation optimale de l'oxygène se trouvant dans le fond du bol, même à haut régime.

D'autres caractéristiques et avantages de l'invention ressortiront à la lecture de la description qui va suivre, en référence aux dessins annexés sur lesquels :
- la figure 1 est une coupe au travers d'une chambre de combustion conforme à l'invention,
- la figure 2 est une coupe simplifiée montrant l'impact de l'injection conformément à l'invention,
- la figure 3 montre une demi-coupe simplifiée illustrant le principe de l'injection selon l'invention, lorsque le piston est au point mort haut,
- la figure 4 montre une demi-coupe simplifiée illustrant le principe des courants gazeux dans le bol du piston selon l'invention, lorsque le piston est au point mort haut,
- la figure 5 montre une demi-coupe simplifiée illustrant le principe des courants gazeux dans le bol du piston selon l'invention, lorsque le piston est en partie descendu,
- la figure 6 est une demi-coupe simplifiée montrant un premier exemple de profil de bol de l'état de la technique,
- la figure 7 est une demi-coupe simplifiée montrant un second exemple de profil de bol de l'état de la technique,
- les figures 8, 9 et 10 illustrent le fonctionnement du piston connu de la figure 6 à trois étape de son cycle.

Le piston 1 comporte une cavité ou bol profilé 2 approximativement centré par rapport à l'axe 3' du cylindre 3 dans lequel le piston est monté coulissant de manière étanche. Le bol est entouré d'une zone de chasse 4 frontale annulaire sensiblement parallèle à la culasse 5. Le fond du bol 2 forme une élévation centrale ou téton 6 en forme de cône, relié à la zone de chasse 4 par une paroi de transition 7 et une paroi latérale 8.

La culasse 5 loge l'injecteur central de carburant 9 à n jets de carburant (par exemple au moins 4 jets) et abrite des soupapes 10 d'admission et d'échappement (par exemple deux soupapes d'admission et deux soupapes d'échappement) disposées autour de l'injecteur 9.

Un moteur regroupe plusieurs chambres de combustion analogues.

Ces dispositions sont classiques, décrites dans les documents déjà cités et n'ont pas besoin d'être plus amplement expliquées.

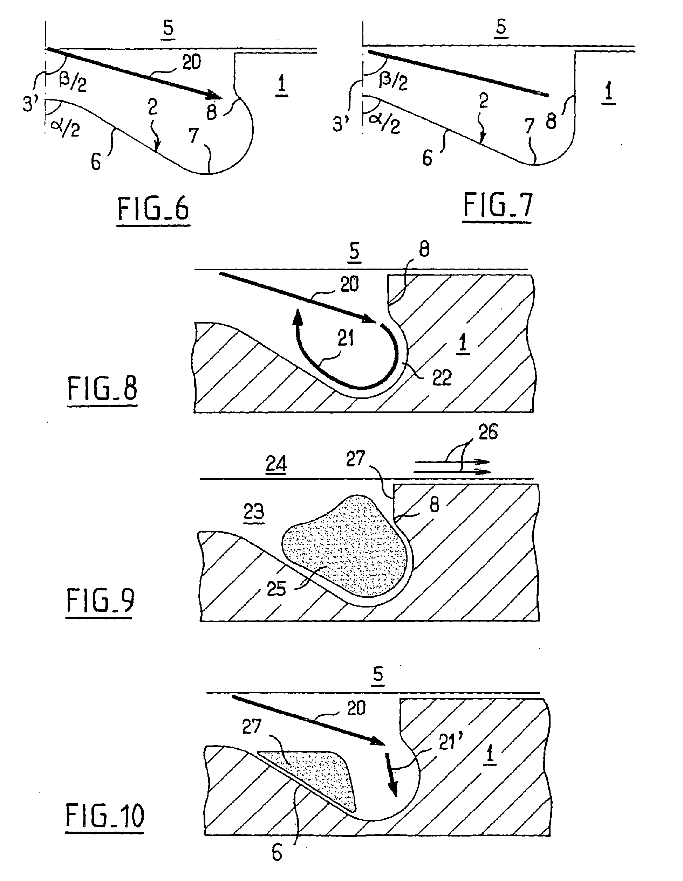

Avant d'examiner en détail ce qui fait l'originalité de l'invention, il est bon de rappeler l'état de la technique en la matière, représenté sur les figures 6 à 10.

Selon un premier exemple de bol connu de l'art antérieur, montré sur la figure 6, le téton 6 est relativement prononcé, c'est-à-dire que l'angle α est relativement petit (par exemple inférieur à 100°), et la paroi latérale 8 comporte un rentrant concave, formé dans le prolongement de la zone de transition 7. Le jet d'injection 20, partant sensiblement du plan de la culasse 5, atteint la paroi latérale 8 vers sa moitié supérieure, de manière que, comme représenté sur la figure 8, lorsque le piston est encore proche du point mort haut, la combustion, entraînée par le jet de carburant à haute pression 20, ait le temps de s'enrouler (flèche 21) dans le tore 22 formé entre les parties 7 et 8, puis de remonter sur le téton central 6.

A faible régime, le piston reste suffisamment longtemps proche du point mort haut pour que ce fonctionnement théorique soit effectivement le fonctionnement pratique et le volume de la cavité est donc correctement utilisé.

En début de détente (figure 9), la combustion est principalement localisée dans la zone 23 de la cavité, dans la partie grisée 25. La paroi externe 8 de la cavité limite l'entraînement de la combustion par le mouvement aérodynamique centrifuge, dit de chasse inverse, représenté par les flèches 26 et se situant dans la zone de cylindre 24 : en effet, la séparation 27 entre la zone de cavité et la zone où s'effectue le mouvement de chasse est assez marquée. L'extraction de la combustion hors de la cavité n'est donc pas favorisée. Il y a donc un risque pour la combustion de rester confinée dans la cavité et de mal utiliser la zone de cylindre 24.

À haut régime, le mouvement décrit précédemment pour la combustion à faible régime n'a pas le temps de s'établir. La combustion suit la longueur libre de jet 20, atteint ensuite le fond de la cavité (flèche 21'), mais ne remonte pas sur le téton 6, le piston descendant trop vite. L'oxygène dans la zone grisée 27 se trouvant autour du téton 6 n'est pas utilisé par la combustion et se trouve piégé dans la cavité lorsque le piston redescend. Le volume de la cavité reste donc partiellement inutilisé par la combustion à haut régime, ce qui dégrade la combustion et les émissions polluantes ou encore dégrade les performances pour un même niveau d'émissions de polluants.

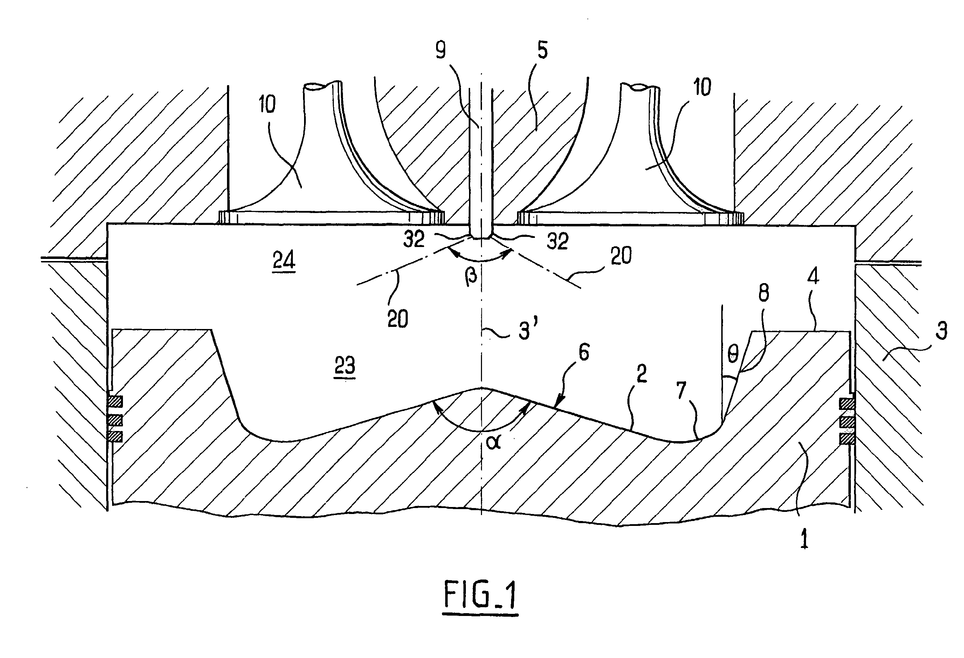

Ce phénomène est évité par la géométrie particulière conforme à l'invention (figures 1 à 5).

D'une part, le téton 6 est peu marqué et proche d'un cône d'un angle au sommet α supérieur à 100 ° et de préférence à 120 °.

D'autre part, la paroi latérale 8 ne comporte pas de rentrant et est évasée à la périphérie de la cavité 24, par exemple sous forme d'une surface tronconique d'inclinaison θ avec la verticale comprise entre 5° et 20 °.

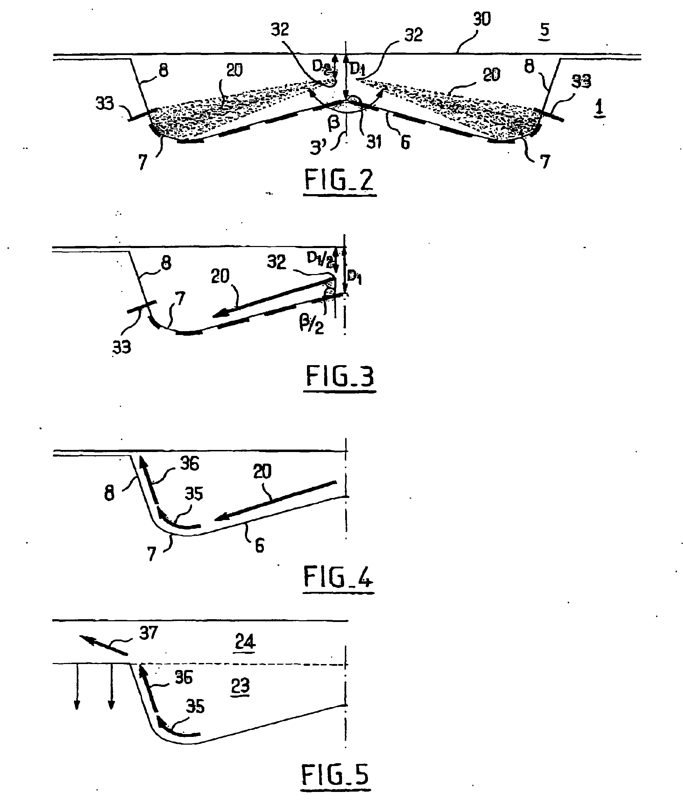

Comme le montre la figure 2, représentant très schématiquement le piston au point mort haut, c'est-à-dire au plus près de la culasse 5, on appelle D₁ la distance entre le plan 30 de la culasse 5 et le sommet 31 du téton 6 et on appelle D₂ la distance entre ce même plan 30 et le départ 32 des jets de carburant délivrés par l'injecteur central 9, selon une nappe d'angle β. Selon l'invention, la géométrie est telle que le point d'impact des jets de carburant se situe au fond de la cavité au point mort, et non plus sur la partie supérieure des parois latérales ; la zone d'impact est sensiblement la zone 6, 7 recouverte en pointillés épais et délimitée par les deux segments 33, au niveau qui sépare la courte transition 7 de la paroi tronconique 8.

L'injection principale doit par ailleurs être proche du point mort haut, comme dans la technique antérieure. Le début de l'injection principale doit être compris dans l'intervalle 20 degrés de vilebrequin avant le point mort haut et 10 degrés après. La fin de cette injection doit intervenir au plus tôt 10 degrés avant le point mort haut.

Pour obtenir l'impact des jets en fond de bol au point mort haut, on utilise un angle de nappe β conventionnel (entre 100 ° et 170 °) mais un point de départ 32 du jet 20 situé à une distance D₂ supérieure à D₁ /2.

Le déroulement de la combustion est illustré sur les figures 4 et 5.

Au début du cycle, quand le piston 1 est proche du point mort haut (figure 4), la vitesse induite par les jets de carburant à haute pression 20 entraîne la combustion le long du fond 6 puis 7 de la cavité (flèches 34, 35), fond vers lequel les jets 20 sont en effet dirigés. Le volume de la cavité est en grande partie balayé par la combustion et donc bien utilisé par celle-ci. Puis le mélange remonte le long de la paroi évasée 8 (flèches 36).

Lors de la détente (figure 5), la combustion a d'une part conservé une partie de la quantité de mouvement induite par les jets 20 et est entraînée d'autre part par le mouvement de chasse inverse et peut donc s'échapper (flèches 37). Ce mouvement n'est pas freiné grâce à la forme évasée de la cavité à sa périphérie. L'extraction de la combustion hors cavité est donc facilitée et la zone de cylindre 24 est mieux utilisée.

## Revendications

1. Chambre de combustion de moteur multicylindre à injection directe de carburant, formée par un cylindre (1), par une culasse (5) sensiblement plate formant couvercle au-dessus du cylindre (1), au moins une soupape (10) d'admission de l'air frais étant montée dans la culasse (5), sensiblement parallèle à l'axe du cylindre (3'), au moins une soupape d'échappement étant montée dans la culasse sensiblement parallèle à l'axe du cylindre, un injecteur central (9) de carburant débouchant dans la culasse (5) et susceptible d'émettre des jets (20) de carburant en une nappe tronconique d'angle β et de départ (32) situé à une distance D₂ du plan de la culasse (5), et par un piston (1) coulissant dans le cylindre (1) entre un point mort haut et un point mort bas et présentant à sa face supérieure un bol profilé comportant un téton central (6) sensiblement conique d'angle α éloigné d'une distance D₁ du plan de la culasse (5) quand il est au point mort haut et raccordé par une courte section concave (7) à une paroi extérieure évasée (8) d'angle θ par rapport à la verticale, le bol (2) étant entouré d'une zone de chasse annulaire (4), l'angle α du téton (6) étant supérieur à 100°, et le départ (32) et l'angle β de la nappe étant choisis en relation l'un à l'autre de manière qu'au point mort haut, le point d'impact de la nappe sur le bol (2) soit situé sur le fond (6, 7) du bol (2), **caractérisée en ce que** l'angle de nappe β est compris entre 100° et 170° et le point de départ des jets (32) est tel que D₂ > D₁ /2, et **en ce que** la paroi extérieure évasée a une inclinaison tranconique comprise entre 5 ° et 20 °.

2. Chambre de combustion selon la revendication 1, **caractérisée en ce que** l'angle α du téton (6) est supérieur à 120 °.

3. Moteur à combustion interne **caractérisé en ce qu**'il comprend plusieurs chambres de combustion selon l'une quelconque des revendications 1 ou 2.

## Claims

1. Combustion chamber for a multi-cylinder direct fuel injection engine, formed by: a cylinder (3); an essentially flat cylinder head (5) forming a cover over the top of the cylinder (3), at least one fresh air admission valve (10) being mounted in the cylinder head (5) essentially parallel to the axis of the cylinder (3'), at least one exhaust valve being mounted in the cylinder head essentially parallel to the cylinder axis, and a central fuel injector (9) feeding out of the cylinder head (5) and capable of emitting jets (20) of fuel in a frustoconical sheet of angle β and of emergence (32) situated at a distance D₂ from the plane of the cylinder head (5); and a piston (1) sliding in the cylinder (3) between top dead centre and bottom dead centre and having in its upper face a shaped cavity comprising an essentially conical central peak (6) of angle α separated by a distance D₁ from the plane of the cylinder head (5) when it is at top dead centre and connected by a short concave section (7) to a flared outer wall (8) forming an angle θ with the vertical, the cavity (2) being surrounded by an annular forcing zone (4), the angle α of the peak (6) being greater than 100°, and the emergence (32) and the angle β of the sheet being chosen in relation to each other in such a way that at top dead centre the point of impact of the sheet on the cavity (2) is located on the bottom (6, 7) of the cavity (2), which chamber is **characterized in that** the sheet angle β is between 100° and 170° and the point of emergence of the jets (32) is such that D₂ > D₁/2, and **in that** the flared outer wall has a frustoconical slope of between 5° and 20°.

2. Combustion chamber according to Claim 1, **characterized in that** the angle α of the peak (6) is greater than 120°.

3. Internal-combustion engine **characterized in that** it comprises several combustion chambers according to either of Claims 1 and 2.

## Patentansprüche

1. Brennraum eines Mehrzylindermotors mit Kraftstoff-Direkteinspritzung, gebildet durch einen Zylinder (3), einen Zylinderkopf (5), der im Wesentlichen flach ist und über dem Zylinder (3) einen Deckel bildet, wobei mindestens ein Einlassventil (10) für die Frischluft in dem Zylinderkopf (5) im Wesentlichen parallel zur zylinderachse (3') montiert ist, mindestens ein Auslassventil im Zylinderkopf im Wesentlichen parallel zur Zylinderachse montiert ist, eine zentral angeordnete Kraftstoff-Einspritzdüse (9) in den Zylinderkopf (5) mündet und in der Lage ist, Kraftstoff in Strahlen (20) flächenhaft in Form eines Kegelstumpfes mit einem Winkel β von einem Ausgangspunkt (32) zu verspritzen, der einen Abstand D₂ zur Ebene des Zylinderkopfes (5) aufweist, und durch einen sich in dem Zylinder (3) zwischen einem oberen Totpunkt und einem unteren Totpunkt hin- und her bewegenden Kolben (1), der an seiner Oberseite einen profilierten Topf mit einem zentral angeordneten Stift (6) besitzt, welcher im Wesentlichen konisch ist und einen Winkel α aufweist und im oberen Totpunkt, wenn er über einen kurzen konkaven Abschnitt (7) an einer sich bezüglich der Senkrechten in einem Winkel θ aufweitenden Außenwand (8) angeschlossen ist, zur Ebene des Zylinderkopfes (5) einen Abstand D₁ aufweist, wobei der Topf (2) von einem ringförmigen Nachlaufbereich (4) umgeben ist, der Winkel α des Stifts (6) mehr als 100° beträgt und der Ausgangspunkt (32) und der Winkel β der durch den Kraftstoff gebildeten Fläche im Verhältnis zueinander derart gewählt sind, dass im oberen Totpunkt der Auftreffpunkt der Kraftstofffläche auf dem Topf (2) sich am Boden (6, 7) des Topfes (2) befindet, **dadurch gekennzeichnet, dass** der Winkel β der Kraftstofffläche zwischen 100° und 170° beträgt und der Ausgangspunkt (32) der Strahlen derart ist, dass D₂ > D₁ /2, und dass die sich aufweitende Außenwand eine kegelstumpfförmige Neigung im Bereich zwischen 5° und 20° besitzt.

2. Brennraum nach Anspruch 1, **dadurch gekennzeichnet, dass** der Winkel α des Stiftes (6) mehr als 120° beträgt.

3. Brennkraftmaschine mit innerer Verbrennung, **dadurch gekennzeichnet, dass** sie mehrere Brennräume nach einem der Ansprüche 1 oder 2 umfasst.
